# EUROPEAN PATENT APPLICATION

(11) **EP 3 466 744 A1**
(43) Date of publication of application: **10.04.2019**
(21) Application number: 17802909.6
(22) Date of filing: 26.05.2017
(51) Int. Cl.: B60L 15/20, B60L 7/10, H02P 5/46, B60L 9/18

(54) **ELECTRIC-POWERED VEHICLE**

(30) Priority: 27.05.2016 JP 2016106403
(71) Applicant: Honda Motor Co., Ltd., Tokyo 107-8556 (JP)
(72) Inventor: HORIUCHI, Yutaka, Wako-shi Saitama 351-0193 (JP)
(74) Representative: Beder, Jens
(86) International application number: PCT/JP2017/019659
(87) International publication number: WO 2017/204323

(57) **Abstract**

Provided is an electric-powered vehicle in which a motor can be driven with a more appropriate torque value for a given situation. This electric-powered vehicle is provided with an electric motor that drives a vehicle wheel, and a control unit that controls the electric motor on the basis of a torque instruction including an instructed torque value for driving the electric motor with a prescribed torque, the control unit having a torque value control unit that decides a prescribed coefficient on the basis of the instructed torque value and a correlating value of the actual speed of the electric motor, and that outputs to the electric motor a torque drive instruction including an appropriate torque value obtained by multiplying the instructed torque value by the prescribed coefficient.

## Description

### TECHNICAL FIELD

The present invention relates to an electric-powered vehicle. In detail, it relates to an electric-power vehicle that outputs to an electric motor an instructed torque value for the torque instruction, by changing to the appropriate torque value in response to a correlating value of an actual rotating speed of the electric motor.

### BACKGROUND ART

Conventionally, electric-powered vehicles have been known in which the wheels are driven by motors (for example, refer to Patent Document 1). Patent Document 1 discloses an electric-powered vehicle which includes a plurality of motors which respectively drive the left and right wheels of the vehicle, and a controller for controlling the drive torque (regenerative braking) of the plurality of motors.
Patent Document 1: Japanese Unexamined Patent Application, Publication No. 2015-116069

### DISCLOSURE OF THE INVENTION

### Problems to be Solved by the Invention

The motor is driven at the instructed torque value included in the torque instruction from the controller. However, the instructed torque value included in the torque instruction is a value based on the demand of the driver, and a case can be considered in which it is preferable to change the instructed torque value included in the torque instruction to a more appropriate value depending on the case.

The present invention has been made by taking account of the above, and an object thereof is to provide an electric-powered vehicle capable of driving a motor at a more appropriate torque value depending on the case.

### Means for Solving the Problems

In order to achieve the above-mentioned object, the present invention provides an electric-powered vehicle (for example, the vehicle 3 described later) which includes: an electric motor (for example, the electric motors 1A, 1B, 2A, 2B described later) which drives a wheel (for example, the right-front wheel RWf, left-front wheel LWf, right-rear wheel RWr, left-rear wheel LWr described later); and a control unit (for example, the ECU 6 described later) which controls the electric motor based on a torque instruction including an instructed torque value for driving the electric motor at a predetermined torque, in which the control unit has a torque value control unit (for example, the torque value control unit 802 described later) which determines a predetermined coefficient based on the instructed torque value and a correlating value of actual rotating speed of the electric motor, and outputs a torque drive instruction including an appropriate torque value obtained by multiplying the predetermined coefficient by the instructed torque value, to the electric motor.

It thereby becomes possible to output the torque drive instruction including the appropriate torque value to the electric motor without directly outputting the instructed torque value. Furthermore, it becomes possible to easily change the appropriate torque value included in the torque drive instruction outputted to the electric motors, and thus possible to raise the degrees of freedom in settings.

In this case, it is preferable for the predetermined coefficient to include a first predetermined coefficient (for example, the first predetermined coefficient K1 described later), and for the torque value control unit to perform control to determine the first predetermined coefficient so that the absolute value for the appropriate torque value becomes a value smaller than the absolute value for the instructed torque value, in a case of the absolute value for the correlating value of actual rotating speed of the electric motor exceeding the absolute value for a first predetermined powered revolution speed value (for example, the first predetermined powered revolution speed value V2, -V2 described later), during powered running of the electric motor.

In the case of the absolute value for the correlating value of the actual rotating speed of the electric motor exceeding the absolute value for the first predetermined powered revolution speed value, it thereby becomes possible to suppress the torque of the electric motors and obtain a torque reduction effect, by suppressing the absolute value for the appropriate torque value to be small.

In this case, it is preferable for the predetermined coefficient to include a second predetermined coefficient (for example the second predetermined coefficient K2 described later), and for the torque value control unit to perform control to determine the second predetermined coefficient so that an attenuation factor is raised for the absolute value for the appropriate torque value obtained by multiplying the first predetermined coefficient and the second predetermined coefficient by the absolute value for the instructed torque value, relative to the absolute value for the appropriate torque value obtained by multiplying the first predetermined coefficient by the absolute value for the instructed torque value, in a case of the absolute value for the correlating value of actual rotating speed of the electric motor exceeding the absolute value for a first predetermined powered revolution speed value, during powered running of the electric motor.

It thereby becomes possible to maintain the actual revolution speed in a smaller speed width (revolution speed width), and possible to decrease the speed width (revolution speed width) corresponding to a portion other than 0 and 1, among the range of values of K1 assumable in the first embodiment. Furthermore, it is possible to ensure stability through a filter of large time constant. It is possible to precisely control the area used as the appropriate torque value.

In addition, it is preferable for the predetermined coefficient to includes a first predetermined coefficient, and for the torque value control unit to perform control to determine the first predetermined coefficient so that the absolute value for the appropriate torque value becomes a value smaller than the absolute value for the instructed torque value, in a case of the absolute value for the correlating value of actual rotating speed of the electric motor falling below the absolute value for a first predetermined regenerative revolution speed value (for example, the first predetermined regenerative revolution speed value V1+DV1, -(V1+DV1) described later), during regenerative running of the electric motor.

In the case of the absolute value for the correlating value of the actual rotating speed of the electric motor falling below the absolute value for the first predetermined regenerative revolution speed value, it thereby becomes possible to suppress the torque of the electric motors and obtain a torque reduction effect, by suppressing the absolute value for the appropriate torque value to be small.

In this case, it is preferable for the predetermined coefficient to include a second predetermined coefficient, and for the torque value control unit to perform control to determine the second predetermined coefficient so that an attenuation factor is raised for the absolute value for the appropriate torque value obtained by multiplying the first predetermined coefficient and the second predetermined coefficient by the absolute value for the instructed torque value, relative to the absolute value for the appropriate torque value obtained by multiplying the first predetermined coefficient by the absolute value for the instructed torque value, in a case of the absolute value for the correlating value of actual rotating speed of the electric motor falling below the absolute value for a first predetermined regenerative revolution speed value, during regenerative running of the electric motor.

It thereby becomes possible to maintain the actual revolution speed in a smaller speed width (revolution speed width), and possible to decrease the speed width (revolution speed width) corresponding to a portion other than 0 and 1, among the range of values of K1 assumable in the first embodiment. Furthermore, it is possible to ensure stability through a filter of large time constant. It is possible to precisely control the area used as the appropriate torque value.

In this case, it is preferable for the electric motor to include: a first electric motor (for example, the electric motor 1A described later) which drives a right-front wheel (for example, the right-front wheel RWf described later); a second electric motor (for example, the electric motor 2A described later) which drives a right-rear wheel (for example, the right-rear wheel RWf described later); a third electric motor (for example, the electric motor 1B described later) which drives a left-front wheel (for example, the left-front wheel LWf described later); and a fourth electric wheel (for example, the electric motor 2B described later) which drives a left-rear wheel (for example, the left-rear wheel LWr described later); and for the torque value control unit to determine the predetermined coefficient independently relatively to each of the first electric motor, the second electric motor, the third electric motor and the fourth electric motor.

It thereby becomes possible for the appropriate torque value to be calculated relative to each of the first electric motor to fourth electric motor, and perform control for appropriate driving independently on each of the electric motors.

### Effects of the Invention

According to the present invention, it is possible to provide an electric-powered vehicle capable of driving a motor at a more appropriate torque value depending on the case.

### BRIEF DESCRIPTION OF THE DRAWINGS

FIG. 1 is a view showing an electric-powered vehicle 3 according to a first embodiment of the present invention;
FIG. 2 is a flowchart of commands to a motor 1A by an ECU 6 in the electric-powered vehicle 3 according to the first embodiment of the present invention;
FIG. 3 is a flowchart showing control of a torque value control unit 802 in the electric-powered vehicle 3 according to the first embodiment of the present invention;
FIG. 4 is a graph showing a relationship between an appropriate torque value and the revolution speed (actual motor speed) of the motor 1A in the electric-powered vehicle 3 according to the first embodiment of the present invention;
FIG. 5 is a flowchart showing control by a torque value control unit 802 of the electric-powered vehicle 3 according to a second embodiment of the present invention;
FIG. 6 is a flowchart showing filter control of rotation speed difference filters 8025, 8026 of the torque value control unit 802 in the electric-powered vehicle 3 according to the second embodiment; and
FIG. 7 is a graph showing the relationship between an appropriate torque value and the revolution speed (actual motor speed) of the motor 1A in the electric-powered vehicle 3 according to the second embodiment of the present invention.

### PREFERRED MODE FOR CARRYING OUT THE INVENTION

Hereinafter, embodiments of the present invention will be explained in detail while referencing the drawings. It should be noted that, in the explanation of a second embodiment and later, the same reference symbols are attached for configurations, etc. shared with the first embodiment, and explanations thereof will be omitted.

### (First Embodiment)

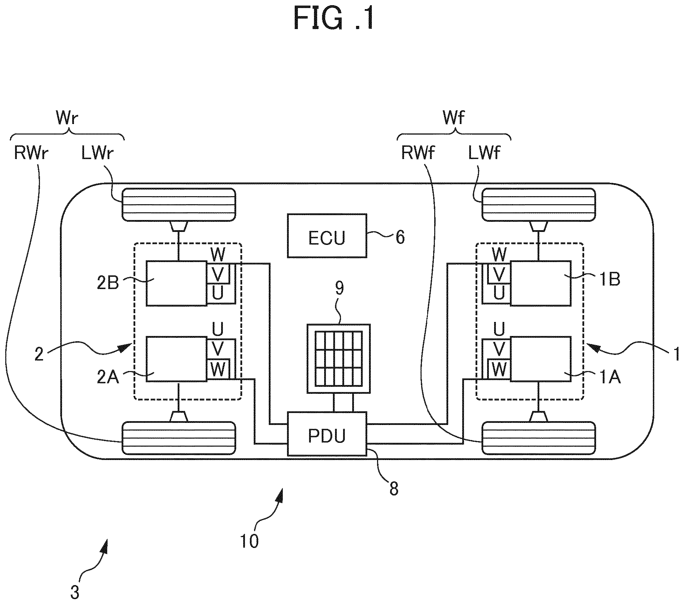

FIG. 1 is a view showing an electric-powered vehicle 3 according to the first embodiment of the present invention. The vehicle 3 equipped with a vehicle drive system 10 according to the present embodiment is an electric-powered vehicle (electric vehicle (EV)) that causes left/right front wheels and left/right rear wheels to drive independently from each other with four motors serving as electric motors as the power sources. As shown in FIG. 1, the vehicle 3 includes a first drive device 1, a second drive device 2, an electronic control unit (hereinafter referred to as "ECU") 6 as a control unit controlling these drive devices, a PDU (power drive unit) 8, and battery 9.

The first drive device 1 is provided at the front of the vehicle 3, and drives the front wheels Wf (RWf, LWf) as first drive wheels. The first drive device 1 includes electric motors 1A, 1B. The torque of these electric motors 1A, 1B is transferred independently to the front wheels Wf (RWf, LWf).

The second drive device 2 is provided at the rear of the vehicle 3, and drives the rear wheels Wr (RWf, LWr) as second drive wheels. The second drive device 2 includes electric motors 2A, 2B. The torque of these electric motors 2A, 2B is transmitted independently to each of the rear wheels Wr (RWr, LWr).

The electric motors 1A, 1B, 2A, 2B, for example, are 3-phase AC motors having a U-phase, V-phase, W-phase, and generate torque for causing the vehicle 3 to travel by way of electric power stored in the battery 9. The electric motors 1A, 1B, 2A, 2B are connected to the battery 9 via the PDU 8 equipped with an inverter. By the driver depressing the accelerator or brake pedal, and the control signal from the ECU 6 being inputted to the PDU 8, the electric power supply from the battery 9 to the electric motors 1A, 1B, 2A, 2B and the energy regeneration from the electric motors 1A, 1B, 2A, 2B to the battery 9 are controlled.

A friction brake (not illustrated) is provided to each of the four of the front wheels Wf (RWf, LWf) and rear wheels Wr (RWr, LWr). This friction brake is configured by a hydraulic disk brake, for example. When the driver depresses the brake pedal, the depressing force is amplified and transferred to the brake pedal via a hydraulic cylinder, etc., and by the friction force being produced between the brake disk and brake pad attached to each drive wheel, braking of the respective drive wheels is performed.

Next, the configuration of the ECU 6 serving as the control unit according to the present embodiment will be explained. The ECU 6 includes an input circuit having functions such as of smoothing the input signal waveform from various sensors, correcting the voltage levels to predetermined levels, and converting analog signal values to digital signal values, and a central arithmetic processing unit (hereinafter referred to as "CPU"). In addition, the ECU 6 includes a storage circuit that stores various arithmetic programs executed by the CPU, computation results, etc., and an output circuit that outputs control signals to the PDU 8, etc.

The ECU 6 consisting of the above such hardware configuration executes control of the electric power supply from the battery 9 to the electric motors 1A, 1B, 2A, 2B, and energy regeneration from the electric motors 1A, 1B, 2A, 2B to the battery 9. In more detail, the ECU 6 serving as the control unit controls the electric motors 1A, 1B, 2A, 2B according to the torque instruction including the instructed torque value for causing the electric motors 1A, 1B, 2A, 2B to drive at a predetermined torque. The detection signals of various sensors such as an accelerator aperture sensor, electric motor revolution speed sensor, and brake depression amount sensor (not illustrated) are inputted via a communication circuit such as a CAN (Controller Area Network), and a control signal is outputted to the PDU 8.

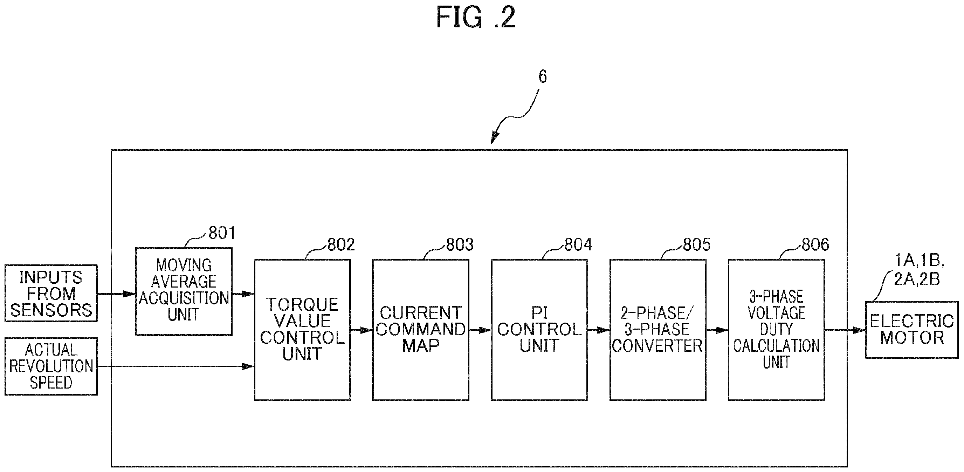

As shown in FIG. 2, the ECU 6 has a moving average acquisition unit 801 as a module, a torque value control unit 802, a current command map 803, PI control unit 804, 2-phase/3-phase converter 805, and 3-phase voltage Duty calculation unit 806. FIG. 2 is a flowchart of a command to the electric motor 1A by the ECU 6 in the electric-powered vehicle 3 according to the first embodiment of the present invention. Hereinafter, since similar control is performed independently on all of the electric motors 1A, 1B, 2A, 2B, it will only be explained for the electric motor 1A, and explanations for the electric motors 1B, 2A, 2B will be omitted.

The moving average acquisition unit 801 stores the inputs of a predetermined number of times in the past, i.e. torque values included in the torque instruction to the electric motor 1A, from the accelerator aperture sensor or brake depression amount sensor (not illustrated). Then, the moving average acquisition unit 801 calculates an average value (hereinafter referred to as "instructed torque value") for the torque values, which are the inputs of a predetermined plurality of times stored.

The torque value control unit 802 changes the torque value for driving the electric motor 1A to an appropriate value, based on an instructed torque value from the moving average acquisition unit 801, and current revolution speed (hereinafter referred to as "actual revolution speed") of the electric motor 1A from the electric motor revolution speed sensor. In other words, the torque value control unit 802 determines a predetermined coefficient based on the torque instruction including the instructed torque value and the actual revolution speed of the electric motor 1A. It should be noted that the actual revolution speed constitutes a correlating value of the actual rotating speed.

The predetermined coefficient includes a first predetermined coefficient K1, and the torque value control unit 802 performs control to determine the first predetermined coefficient K1, so that the absolute value for the appropriate torque value becomes a value smaller than the absolute value for the instructed torque value, in the case of the absolute value for the revolution speed of the electric motor 1A exceeding the absolute value for a first predetermined powered revolution speed value (V2, -V2) during powered running of the electric motor 1A. In addition, the torque value control unit 802 performs control to determine the first predetermined coefficient K1, so that the absolute value for the appropriate torque value becomes a value smaller than the absolute value for the instructed torque value, in the case of the absolute value for the revolution speed of the electric motor 1A falling below the absolute value for the first predetermined regeneration revolution speed value (V1+DV1, - (V1+DV1)), during regenerative running of the electric motor 1A. Then, the torque value control unit 802 outputs the torque drive instruction including the appropriate torque value obtained by multiplying the first predetermined coefficient K1 by the instructed torque value, to the electric motor 1A. The details of control of the torque value control unit 802 will be described later.

The current command map 803 is created in advance and saved in a storage circuit (not illustrated). By the current command map 803 being referenced, the current value corresponding to the appropriate torque value outputted from the torque value control unit 802 is outputted to the PI control unit 804. The PI control unit 804 outputs the 2-phase AC current determined according to feedback control to the 2-phase/3-phase converter 805. The 2-phase/3-phase converter 805 inputs the 2-phase AC current outputted from the PI control unit 804, converts into 3-phase AC current, and outputs the 3-phase AC current to the 3-phase voltage Duty calculation unit 806. The 3-phase voltage Duty calculation unit 806 calculates the Duty ratio of the 3-phase current voltage outputted from the 2-phase/3-phase converter 805, and outputs a 3-phase AC voltage to the electric motor 1A based on the calculated Duty ratio.

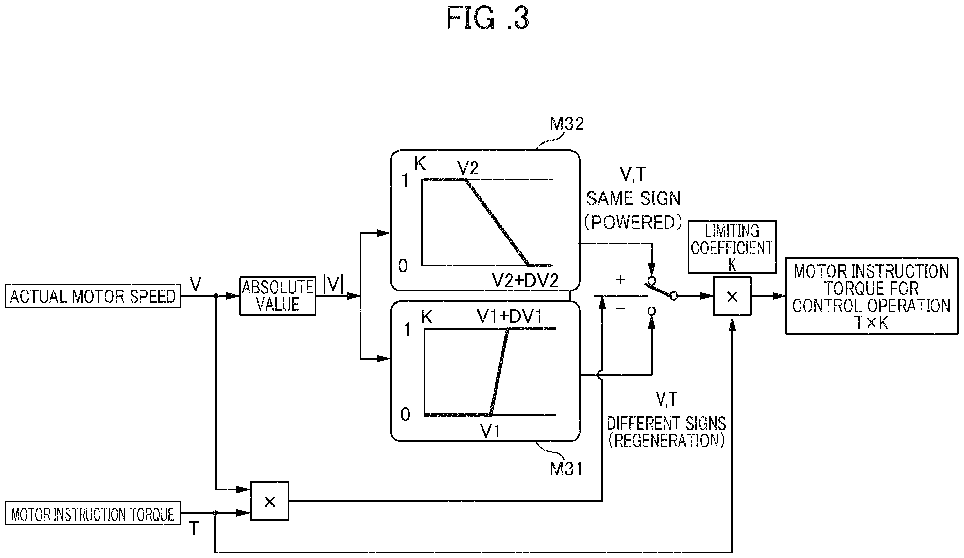

Hereinafter, the details of control of the torque value control unit 802 will be explained. FIG. 3 is a flowchart showing the control of the torque value control unit 802 in the electric-powered vehicle 3 according to the first embodiment of the present invention. In the following explanation, when the vehicle 3 (refer to FIG. 1) is moving forward, the right-front wheel RWf rotates in the clockwise direction, and the actual revolution speed of the electric motor 1A shall adopt a positive value. In addition, when the vehicle 3 is moving forward, the right-rear wheel RWr rotates in the clockwise direction, and the actual revolution speed of the electric motor 2A shall adopt a positive value. In addition, when the vehicle 3 is moving forward, the left-front wheel LWf rotates in the counter-clockwise direction, and the actual revolution speed of the electric motor 1B shall adopt a negative value. In addition, when the vehicle 3 is moving forward, the left-rear wheel LWr rotates in the counter-clockwise direction, and the actual revolution speed of the electric motor 2B shall adopt a negative value. When the vehicle 3 is moving in reverse, the left/right-front wheels LWf, Rwf and the left/right-rear wheels rotate in the opposite directions to when the vehicle 3 is moving forward, and the actual revolution speeds of the electric motors 1A, 1B, 2A, 2B shall adopt values of the opposite sign.

The torque value control unit 802 first inputs the actual revolution speed (actual motor speed V) of the electric motor 1A, and the instructed torque value (motor instruction torque T) from the moving average acquisition unit 801. Next, the absolute value for the actual revolution speed of the electric motor 1A is obtained. In addition, the torque value control unit 802 calculates the product of the actual revolution speed of the electric motor 1A and the instructed torque value from the moving average acquisition unit 801 (product of V and T).

In the case of the value of the product of the actual revolution speed of the electric motor 1A and the instructed torque value from the moving average acquisition unit 801 being a negative value, the vehicle 3 regenerates, and in this case, the map M31 is used for calculating the first predetermined coefficient K1 described later. In the map M31, V1 is defined as the lower limit regulation speed, DV1 is defined as the lower limit regulating width, and in the case of the absolute value (|V|) for the actual revolution speed of the electric motor 1A being no more than V1, the first predetermined coefficient K1 is set to "0". In the case of the absolute value for the actual revolution speed of the electric motor 1A exceeding V1 and being no more than V1+DV1, the first predetermined coefficient K1 is set to "(|V|-V1)/DV1". In the case of the absolute value for the actual revolution speed of the electric motor 1A exceeding V1+DV1, the first predetermined coefficient K1 is determined as "1".

In the case of the product of the actual revolution speed of the electric motor 1A and the instructed torque value from the moving average acquisition unit 801 (product of V and T) being a positive value, the vehicle 3 exerts power, and in this case, the map M32 is used for calculating the first predetermined coefficient K1 described later. In the map M32, V2 is defined as the upper limit regulation speed, and DV2 is defined as the upper limit regulating width, and in the case of the absolute value (|V|) for the actual revolution speed of the electric motor 1A being no more than V2, the first predetermined coefficient K1 is set to "1". In the case of the absolute value for the actual revolution speed of the electric motor 1A exceeding V2 and being no more than V2+DV2, the first predetermined coefficient K1 is set to "(V2-|V|)/DV2". In the case of the absolute value for the actual revolution speed of the electric motor 1A exceeding V2+DV2, the first predetermined coefficient K1 is determined as "0".

Then, the torque value control unit 802 calculates the product of the instructed torque value, and the determined first predetermined coefficient K1 (product of T and K1) as the appropriate torque value. According to the above, the torque value control unit 802 determines the predetermined coefficient K1 based on the actual revolution speed of the electric motor 1A, and obtains the appropriate torque value.

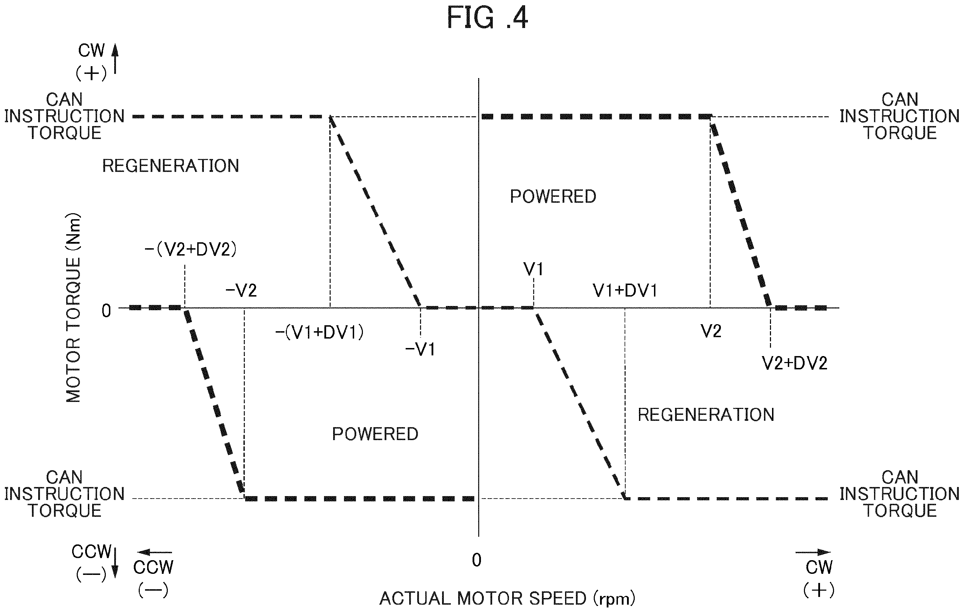

The relationship between the appropriate torque value obtained in the above way and the actual revolution speed of the electric motor 1A is as shown in FIG. 4. FIG. 4 is a graph showing the relationship between the appropriate torque value and the revolution speed of the electric motor 1A (actual motor speed) in the electric-powered vehicle 3 according to the first embodiment of the present invention. In other words, in the first quadrant of FIG. 4, the appropriate torque value (motor torque) relative to the actual revolution speed of the motor 1A (actual motor speed) is shown upon the electric motor 1A rotating clockwise to exert power. When the actual revolution speed exceeds V2, the appropriate torque value is determined as a value smaller than the instructed torque value (CAN instruction torque). More specifically, in the case of the actual revolution speed exceeding V2 and being no more than V2+DV2, the appropriate torque value becomes gradually smaller from the instructed torque value as the actual revolution speed increases, and when the actual revolution speed exceeds V2+DV2, the appropriate torque value is determined as "0".

In addition, in the second quadrant of FIG. 4, the appropriate torque value relative to the actual revolution speed of the electric motor 1A is shown upon the electric motor 1A rotating counter-clockwise and regenerating. When the absolute value for the actual revolution speed is no more than the absolute value (|(V1+DV1)|) for -(V1+DV1), the absolute value for the appropriate torque value is determined as a value smaller than the absolute value for the instructed torque value. More specifically, in the case of the absolute value for the actual revolution speed being no more than the absolute value for -(V1+DV1) and exceeding the absolute value for -V1, the appropriate torque value gradually becomes smaller from the instructed torque value (CAN command torque) as the absolute value for the actual revolution speed becomes smaller, and when the absolute value for the actual revolution speed is smaller than the absolute value for -V1, the appropriate torque value is determined as "0".

In the third quadrant of FIG. 4, the appropriate torque value relative to the actual revolution speed of the electric motor 1A is shown upon the electric motor 1A rotating counter-clockwise and exerting power. When the absolute value for the actual revolution speed exceeds the absolute value (|-V2|) for -V2, the absolute value for the appropriate torque value is determined as a value smaller than the absolute value for the instructed torque value. More specifically, in the case of the absolute value for the actual revolution speed exceeding the absolute value for -V2 and being no more than the absolute value (|-(V2+DV2)|) for - (V2+DV2), the absolute value for the appropriate torque value gradually becomes smaller from the absolute value from the instructed torque value (CAN instruction torque), as the absolute value for the actual revolution speed becomes larger, and when the absolute value for the actual revolution speed exceeds the absolute value for -(V2+DV2), the appropriate torque value is determined as "0".

In addition, in the fourth quadrant of FIG. 4, the appropriate torque value relative to the actual revolution speed of the electric motor 1A is shown upon the electric motor 1A rotating clockwise and regenerating. When the actual revolution speed is no more than V1+DV1, the absolute value for the appropriate torque value is determined as a value smaller than the absolute value for the instructed torque value. More specifically, in the case of the actual revolution speed being no more than V1+DV1 and exceeding V1, the absolute value for the appropriate torque value gradually becomes smaller from the absolute value for the instructed torque value (CAN instruction torque), as the actual revolution speed becomes smaller, and when the actual revolution speed is smaller than V1, the appropriate torque value is determined as "0".

The following effects are exerted according to the present embodiment. In the present embodiment, the electric-powered vehicle 3 includes the electric motors 1A, 1B, 2A, 2B driving the wheels, and the ECU 6 serving as a control unit which controls the electric motors 1A, 1B, 2A, 2B according to torque instructions including the instructed torque values for driving the electric motors 1A, 1B, 2A, 2B at predetermined torques. The ECU 6 has the torque value control unit 802 which determines a predetermined coefficient (first predetermined coefficient K1) based on the instructed torque values and revolution speeds of the electric motors 1A, 1B, 2A, 2B, and outputs the torque drive instructions including the appropriate torque values obtained by multiplying the predetermined coefficient by the instructed torque value to the electric motors 1A, 1B, 2A, 2B.

It thereby becomes possible to output the torque drive instruction including the appropriate torque value to the electric motors 1A, 1B, 2A, 2B without directly outputting the instructed torque value. Furthermore, it becomes possible to easily change the appropriate torque value included in the torque drive instruction outputted to the electric motors 1A, 1B, 2A, 2B, and thus possible to raise the degrees of freedom in settings.

In addition, with the present embodiment, the predetermined coefficient includes a first predetermined coefficient K1. Then, the torque value control unit 802, in the case of the absolute value for the revolution speed of the electric motors 1A, 1B, 2A, 2B exceeding the absolute value for the first predetermined powered revolution speed value (V2, -V2) during powered running of the electric motors 1A, 1B, 2A, 2B, performs control to determine the first predetermined coefficient K1, so that the absolute value for the appropriate torque value becomes a value smaller than the absolute value for the instructed torque value.

In the case of the absolute value for the revolution speed of the electric motors 1A, 1B, 2A, 2B exceeding the absolute value for the first predetermined powered revolution speed value (V2, -V2), it becomes possible to suppress the torque of the electric motors 1A, 1B, 2A, 2B and obtain a torque reduction effect, by suppressing the absolute value for the appropriate torque value to be small.

In addition, with the present embodiment, the predetermined coefficient includes the first predetermined coefficient K1. Then, the torque value control unit 802, in the case of the absolute value for the revolution speed of the electric motors 1A, 1B, 2A, 2B falling below the absolute value for the first predetermined regenerative-driving revolution speed value (V1+DV1, -(V1+DV1)) during regenerative driving of the electric motors 1A, 1B, 2A, 2B, performs control to determine the first predetermined coefficient K1, so that the absolute value for the appropriate torque value becomes a value smaller than the absolute value for the instructed torque value.

In the case of the absolute value for the revolution speed of the electric motors 1A, 1B, 2A, 2B falling below the absolute value for the first predetermined regenerative-driving revolution speed value (V1+DV1, -(V1+DV1)), it becomes possible to suppress the torque of the electric motors 1A, 1B, 2A, 2B and obtain a torque reduction effect, by suppressing the absolute value for the appropriate torque value to be small.

In addition, with the present embodiment, the electric motors 1A, 1B, 2A, 2B include the first motor 1A which drives the right-front wheel RWf, the second electric motor 2A which drives the right-rear wheel RWf, the third electric motor 1B which drives the left-front wheel LWf, and the fourth electric motor 2B which drives the left-rear wheel LWr. The torque value control unit 802 determines predetermined coefficients (first predetermined coefficient K1) independently relative to each of the first electric motor 1A, second electric motor 2A, third electric motor 1B and fourth electric motor 2B.

It thereby becomes possible for the appropriate torque value to be calculated relative to each of the first electric motor to fourth electric motor, and perform control for appropriate driving independently on each of the electric motors 1A, 1B, 2A, 2B.

### (Second Embodiment)

The electric-powered vehicle 3 according to the second embodiment of the present invention differs only in the control of the torque value control unit 802, compared to the electric-powered vehicle 3 according to the first embodiment. More specifically, the torque value control unit 802, in addition to the first predetermined coefficient K1 determined in the first embodiment, determines a second predetermined coefficient K2, and calculates a product of the instructed torque value, the first predetermined coefficient K1 and second predetermined coefficient K2 as an appropriate torque value. The second predetermined coefficient K2 is determined independently relative to each of the electric motors 1A, 1B, 2A, 2B, similarly to the first embodiment. Then, the appropriate torque value is calculated relative to each of the electric motors 1A, 1B, 2A, 2B, whereby the torque value control unit 802 performs control for appropriate driving independently for each of the electric motors 1A, 1B, 2A, 2B.

In other words, the predetermined coefficient includes the second predetermined coefficient K2. The torque value control unit 802, in the case of the absolute value for the revolution speed of the electric motors 1A, 1B, 2A, 2B exceeding the absolute value for the first predetermined powered revolution speed value (V2, -V2) during powered-running of the electric motors 1A, 1B, 2A, 2B, performs control to determine the second predetermined coefficient K2 so that the attenuation factor is raised for the absolute value for the appropriate torque value obtained by multiplying the first predetermined coefficient K1 and second predetermined coefficient K2 by the absolute value for the instructed torque value, relative to the absolute value for the appropriate torque value obtained by multiplying the first predetermined coefficient K1 by the absolute value for the instructed torque value. Herein, "attenuation factor is raised" indicates the matter of the absolute value for the appropriate torque value quickly approaching 0, as the absolute value for the actual revolution speed becomes larger as described later, by a smaller increase in the absolute value for the actual revolution speed.

In addition, the predetermined coefficient includes the second predetermined coefficient K2. The torque value control unit 802, in the case of the absolute value for the revolution speed of the electric motors 1A, 1B, 2A, 2B falling below the absolute value for the first predetermined regeneration revolution speed value (V1+DV, -(V1+DV1)) during regenerative running of the electric motors 1A, 1B, 2A, 2B, performs control to determine the second predetermined coefficient K2, so that the attenuation factor is raised for the absolute value for the appropriate torque value obtained by multiplying the first predetermined coefficient K1 and second predetermined coefficient K2 by the absolute value for the instructed torque value, relative to the absolute value for the appropriate torque value obtained by multiplying the first predetermined coefficient K1 by the absolute value for the instructed torque value
Herein, "attenuation factor is raised" indicates the matter of the absolute value for the appropriate torque value quickly approaching 0, as the absolute value for the actual revolution speed becomes smaller as described later, by a smaller decrease in the absolute value for the actual revolution speed.

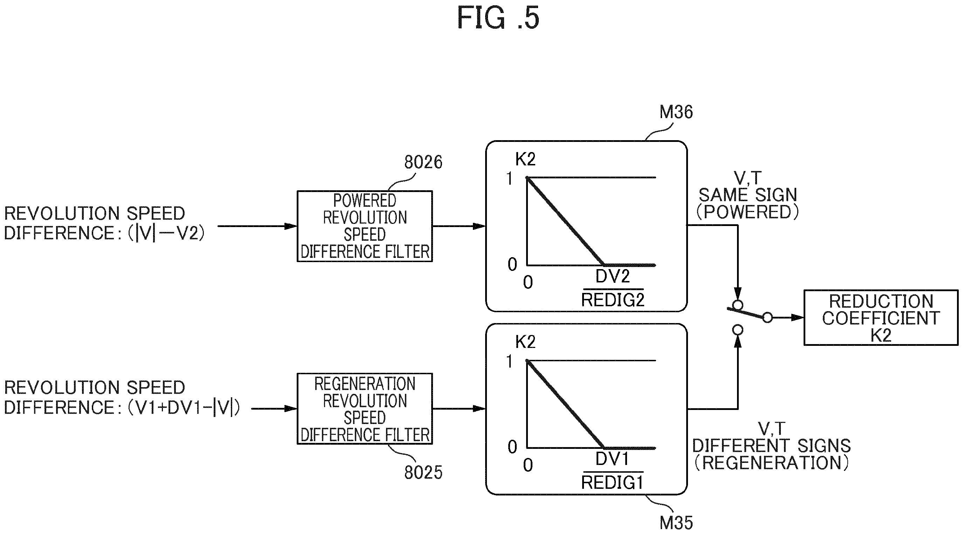

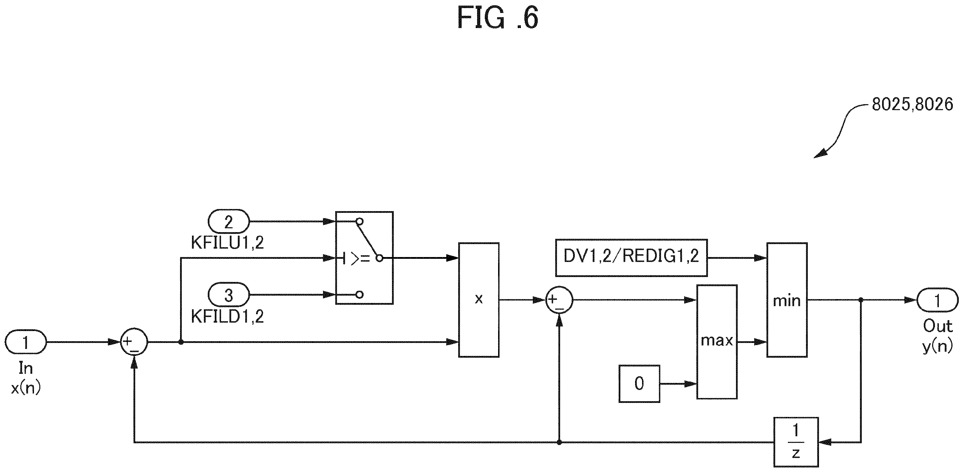

Hereinafter, the process of determination of the second predetermined coefficient K2 by the torque value control unit 802 will be explained. Since the same control is independently performed on all of the electric motors 1A, 1B, 2A, 2B, it will only be explained for the electric motor 1A, and explanations for the electric motors 1B, 2A, 2B will be omitted. FIG. 5 is a flowchart showing control by the torque value control unit 802 of the electric-powered vehicle 3 according to the second embodiment of the present invention. FIG. 6 is a flowchart showing filter control in the revolution speed difference filters 8025, 8026 of the torque value control unit 802 in the electric-powered vehicle 3 according to the second embodiment of the present invention. In the following explanation, REDIG1 is defined as the lower limit regulating width reduction rate, REDIG2 is defined as the upper limit regulating width reduction rate, KFILU1 is defined as a regeneration increasing-side filter function, KFILD1 is defined as the regeneration decreasing-side filter coefficient, KFILU2 is defined as a powered increasing-side filter coefficient, and KFILD2 is defined as a powered decreasing-side filter coefficient.

In the case of any of DV1, DV2, V1 and V2 being no more than 0, or in the case of REDIG1 being 0, or in the case of REDIG2 being 0, the second predetermined coefficient K2 is determined as "1".

When the electric motor 1A is regenerating, the map M35 is referenced, and the second predetermined coefficient K2 is determined in the following way. First, a value X(n) for the V1+DV1-|V|, which is the revolution speed difference, is inputted to the regeneration revolution speed difference filter 8025. Next, judgment is performed as to whether the value "X(n)-y(n-1)" of the difference from subtracting a value y(n-1) previously inputted to the regeneration revolution speed difference filter 8025 from the value X(n) is at least 0, or is a negative value.

Next, in the case of the value of the difference "X(n)-y(n-1)" being at least 0, the following judgment is performed. First, the larger among "0" and "(X(n)-y(n-1))*KFILU1+y(n-1)" is selected, then the smaller among this larger one and "DV1/REDIG1" is outputted as the output value y(n) of the regeneration revolution speed difference filter 8025, and the torque value control unit 802 determines this output value y(n) as the second predetermined coefficient K2.

Next, in the case of the value of difference "X(n)-y(n-1)" being less than 0, the following judgment is performed. First, the larger among "0" and 2(X(n)-y(n-1))*KFILD1+y(n-1)" is selected, then the smaller among this larger one and "DV1/REDIG1" is outputted as the output value y(n) of the regeneration revolution speed difference filter 8025, and the torque value control unit 802 determines this output value y(n) as the second predetermined coefficient K2.

When the electric motor 1A is powering, the map M36 is referenced, and the second predetermined coefficient K2 is determined in the following way. First, the value X(n) of "|V|-V2", which is the revolution speed difference, is inputted to the powered revolution speed difference filter 8026. Next, judgment is performed as to whether the value "X(n)-y(n-1)" of the difference from subtracting a value y(n-1) previously inputted to the powered revolution speed difference filter 8026 from the value X(n) is at least 0, or is a negative value.

Next, in the case of the value of the difference "X(n)-y(n-1)" being at least 0, the following judgment is performed. First, the larger among "0" and "(X(n)-y(n-1))*KFILU2+y(n-1)" is selected, then the smaller among this larger one and "DV2/REDIG2" is outputted as the output value y(n) of the powered revolution speed difference filter 8026, and the torque value control unit 802 determines this output value y(n) as the second predetermined coefficient K2.

Next, in the case of the value of difference "X(n)-y(n-1)" is less than 0, the following judgment is performed. First, the larger among "0" and "(X(n)-y(n-1))*KFILD2+y(n-1)" is selected, then the smaller among this larger one and "DV2/REDIG2" is outputted as the output value y(n) of the powered revolution speed difference filter 8026, and the torque value control unit 802 determines this output value y(n) as the second predetermined coefficient K2.

Then, the torque value control unit 802 calculates the product of the instructed torque value, determined first predetermined coefficient K1, and determined second predetermined coefficient K2 as the appropriate torque value. The torque value control unit 802 thereby determines the predetermined coefficients K1, K2 based on the actual revolution speed of the electric motor 1A, whereby the appropriate torque value is obtained.

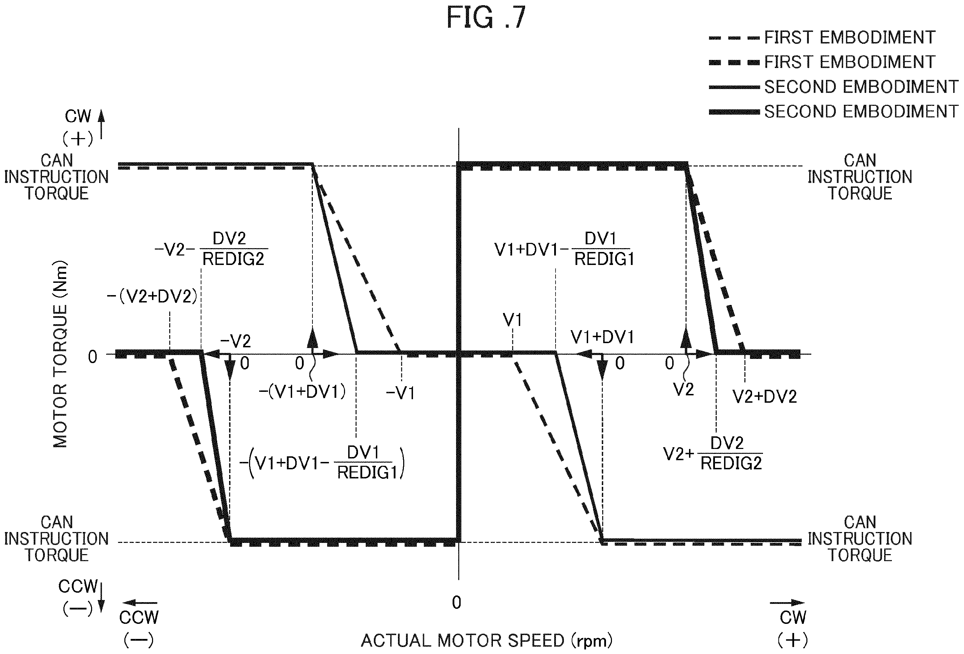

The relationship between the appropriate torque value determined in the above way and the actual revolution speed of the electric motor 1A is as shown in FIG. 7. FIG. 7 is a graph showing the relationship between the appropriate torque value and the revolution speed of the electric motor 1A (actual motor speed) in the electric-powered vehicle 3 according to the second embodiment of the present invention. In other words, in the first quadrant of FIG. 7, the appropriate torque value relative to the actual revolution speed (actual motor speed) of the electric motor 1A is shown upon the electric motor 1A powering by rotating clock-wise. When the actual revolution speed exceeds V2, the actual torque value is determined as a value smaller than the instructed torque value (CAN instruction torque). More specifically, in the case of the actual revolution speed exceeding V2, and being no more than V2+DV2/REDIG2, which is a value smaller than V2+DV2, the appropriate torque value becomes gradually smaller from the instructed torque value as the actual revolution speed increases, and when the actual revolution speed exceeds V2+DV2/REDIG2, the appropriate torque value is determined as "0".

In addition, in the second quadrant of FIG. 7, the appropriate torque value relative to the actual revolution speed (actual motor speed) of the electric motor 1A is shown upon the electric motor 1A regenerating by rotating counter-clockwise. When the absolute value for the actual revolution speed is no more than the absolute value for -(V1+DV1) (|-(V1+DV1)|), the absolute value for the appropriate torque value is determined as a value smaller than the absolute value for the instructed torque value. More specifically, in the case of the absolute value for the actual revolution speed being no more than the absolute value for -(V1+DV1), and exceeding the absolute value (|-(V1+DV1-DV1/REDIG1)|) for -(V1+DV1-DV1/REDIG1), which is greater than the absolute value for -V1, the appropriate torque value becomes gradually smaller from the instructed torque value, as the absolute value for the actual revolution speed decreases, and when the absolute value for the actual revolution speed is smaller than the absolute value for -V1, the appropriate torque value is determined as "0".

In the third quadrant of FIG. 7, the appropriate torque value relative to the actual revolution speed (actual motor speed) of the electric motor 1A is shown upon the electric motor 1A powers by rotating counter clock-wise. When the absolute value for the actual revolution speed exceeds the absolute value for -V2, the absolute value for the appropriate torque value is determined as a value smaller than the absolute value for the instructed torque value. More specifically, in the case of the absolute value for the actual revolution speed exceeding the absolute value for -V2, and being no more than the absolute value (|-V2-DV2/REDIG2|) for - V2-DV2/REDIG2, which is a value greater than the absolute value (|-(V2+DV2)|) for - (V2+DV2), the absolute value for the appropriate torque value becomes gradually smaller from the absolute value for the instructed torque value, as the absolute value for the actual revolution speed increases, and when the absolute value for the actual revolution speed exceeds the absolute value for -V2-DV2/REDIG2, the appropriate torque value is determined as "0".

In addition, in the fourth quadrant of FIG. 7, the appropriate torque value relative to the actual revolution speed (actual motor speed) of the electric motor 1A is shown upon the electric motor 1A regenerating by rotating clockwise. When the absolute value for the actual revolution speed is no more than V1+DV1, the absolute value for the appropriate torque value is determined as a value smaller than the absolute value for the instructed torque value. More specifically, in the case of the actual revolution speed being no more than the absolute value for V1+DV1, and exceeding V1+DV1-DV1/REDIG1, which is greater than V1, the absolute value for the appropriate torque value becomes gradually smaller from the absolute value for the instructed torque value, as the actual revolution speed decreases, and when the actual revolution speed is smaller than V1+DV1-DV1/REDIG1, the appropriate torque value is determined as 0.

According to the present embodiment, the following effects are exerted. In the present embodiment, the predetermined coefficients have the second predetermined coefficient K2. The torque value control unit 802 performs control to determine the second predetermined coefficient K2 so that, in a case of the absolute value for the revolution speed of the electric motor 1A, 1B, 2A, 2B exceeds the absolute value for the first predetermined powered-running revolution speed value (V2, -V2), during powered running of the electric motor 1A, 1B, 2A, 2B, the attenuation factor is raised for the absolute value for the appropriate torque value obtained by multiplying the first predetermined coefficient K1 and second predetermined coefficient K2 by the absolute value for the instructed torque value, relative to the appropriate torque value obtained by multiplying the first predetermined coefficient K1 by the absolute value for the instructed torque value.

In addition, the predetermined coefficient includes the second predetermined coefficient K2. The torque value control unit 802 performs control to determine the second predetermined coefficient K2 so that, in the case of the absolute value for the revolution speed of the electric motor 1A, 1B, 2A, 2B falling below the absolute value for the first predetermined regeneration revolution speed value (V1+DV1, -(V1+DV1)) during regenerative running of the electric motor 1A, 1B, 2A, 2B, the attenuation factor is raised for the absolute value for the appropriate torque value obtained by multiplying the first predetermined coefficient K1 and second predetermined coefficient K2 by the absolute value for the instructed torque value, relative to the absolute value for the appropriate torque value obtained by multiplying the first predetermined coefficient K1 by the absolute value for the instructed torque value.

It thereby becomes possible to maintain the actual revolution speed in a smaller speed width (revolution speed width), and possible to decrease the speed width (revolution speed width) corresponding to a portion other than 0 and 1, among the range of values of K1 assumable in the first embodiment. Furthermore, it is possible to ensure stability through a filter of large time constant. It is possible to precisely control the area used as the appropriate torque value.

It should be noted that the present invention is not limited to the above-mentioned embodiments, and that modifications, improvements, etc. in a scope that can achieve the object of the present invention are also encompassed by the present invention. For example, the torque value control unit 802 of the electric-powered vehicle 3 in the above-mentioned embodiments performs torque reduction control; however, it is not limited thereto. Therefore, depending on the case, the torque value control unit 802 may perform control such that the absolute value for the appropriate torque value becomes greater than the absolute value for the instructed torque value.

In addition, the electric-powered vehicle 3 according to the above-mentioned embodiments is an electric-powered vehicle (electric vehicle (EV)) that causes left/right front wheels and left/right rear wheels to drive independently from each other with the four motors serving as electric motors as the power source; however, it is not limited thereto. For example, the electric-powered vehicle may be a vehicle having electric motors as the power source, such as a hybrid vehicle (HEV), plug-in hybrid vehicle (PHEV), fuel cell vehicle (FCV) and plug-in fuel cell vehicle (PFCV).

In addition, in the above-mentioned embodiments, the actual revolution speed constitutes a correlating value of the actual rotating speed; however, it is not limited to this configuration. For example, the correlating value of the actual rotating speed may be constituted by the angular speed, etc. of the actual motor.

In addition, the configurations of each part of the electric-powered vehicle are not limited to the configuration of each part in the electric-powered vehicle 3 in the above-mentioned embodiments.

### EXPLANATION OF REFERENCE NUMERALS

1A electric motor (first electric motor)
1B electric motor (third electric motor)
2A electric motor (second electric motor)
2B electric motor (fourth electric motor)
3 vehicle (electric-powered vehicle)
6 ECU
802 torque value control unit
K1 first predetermined coefficient
K2 second predetermined coefficient
RWf right-front wheel
LWf left-front wheel
RWr right-rear wheel
LWr left-rear wheel
V2, -V2 first predetermined powered revolution speed value
V1+DV1, -(V1+DV1) first predetermined regenerative revolution speed value

## Claims

1. An electric-powered vehicle comprising:
an electric motor which drives a wheel; and
a control unit which controls the electric motor based on a torque instruction including an instructed torque value for driving the electric motor at a predetermined torque,
wherein the control unit has a torque value control unit which determines a predetermined coefficient based on the instructed torque value and a correlating value of actual rotating speed of the electric motor, and outputs a torque drive instruction including an appropriate torque value obtained by multiplying the predetermined coefficient by the instructed torque value, to the electric motor.

2. The electric-powered vehicle according to claim 1,
wherein the predetermined coefficient includes a first predetermined coefficient, and
wherein the torque value control unit performs control to determine the first predetermined coefficient so that the absolute value for the appropriate torque value becomes a value smaller than the absolute value for the instructed torque value, in a case of the absolute value for the correlating value of actual rotating speed of the electric motor exceeding the absolute value for a first predetermined powered revolution speed value, during powered running of the electric motor.

3. The electric-powered vehicle according to claim 2,
wherein the predetermined coefficient includes a second predetermined coefficient, and
wherein the torque value control unit performs control to determine the second predetermined coefficient so that an attenuation factor is raised for the absolute value for the appropriate torque value obtained by multiplying the first predetermined coefficient and the second predetermined coefficient by the absolute value for the instructed torque value, relative to the absolute value for the appropriate torque value obtained by multiplying the first predetermined coefficient by the absolute value for the instructed torque value, in a case of the absolute value for the correlating value of actual rotating speed of the electric motor exceeding the absolute value for a first predetermined powered revolution speed value, during powered running of the electric motor.

4. The electric-powered vehicle according to claim 1,
wherein the predetermined coefficient includes a first predetermined coefficient, and
wherein the torque value control unit performs control to determine the first predetermined coefficient so that the absolute value for the appropriate torque value becomes a value smaller than the absolute value for the instructed torque value, in a case of the absolute value for the correlating value of actual rotating speed of the electric motor falling below the absolute value for a first predetermined regenerative revolution speed value, during regenerative running of the electric motor.

5. The electric-powered vehicle according to claim 4,
wherein the predetermined coefficient includes a second predetermined coefficient, and
wherein the torque value control unit performs control to determine the second predetermined coefficient so that an attenuation factor is raised for the absolute value for the appropriate torque value obtained by multiplying the first predetermined coefficient and the second predetermined coefficient by the absolute value for the instructed torque value, relative to the absolute value for the appropriate torque value obtained by multiplying the first predetermined coefficient by the absolute value for the instructed torque value, in a case of the absolute value for the correlating value of actual rotating speed of the electric motor falling below the absolute value for a first predetermined regenerative revolution speed value, during regenerative running of the electric motor.

6. The electric-powered vehicle according to any one of claims 1 to 5, wherein the electric motor includes:
a first electric motor which drives a right-front wheel;
a second electric motor which drives a right-rear wheel;
a third electric motor (1B) which drives a left-front wheel; and
a fourth electric wheel which drives a left-rear wheel,
wherein the torque value control unit determines the predetermined coefficient independently relatively to each of the first electric motor, the second electric motor, the third electric motor and the fourth electric motor.
